# EUROPEAN PATENT APPLICATION

(11) **EP 2 366 526 A1**
(43) Date of publication of application: **21.09.2011**
(21) Application number: 11250304.0
(22) Date of filing: 14.03.2011
(51) Int. Cl.: B29C 45/14, B29C 45/16, B29C 45/44, H01Q 1/24, H01Q 1/40

(54) **Antenna pattern frame, case of electronic device mold for manufacturing the same**

(30) Priority: 15.03.2010 KR 20100022827
(71) Applicant: Samsung Electro-Mechanics Co., Ltd., Suwon, Kyungki-do (KR)
(72) Inventor: Jeon, Dae Song, Yeongtong-gu Suwon, Gyunggi-do (KR); Nam, Hyun Kil, Jangan-gu Suwon, Gyunggi-do (KR); Park, Hyun Do, Giheung-du Yongin, Gyunggi-so (KR); Lee, Dae Kyu, Yeongtong-gu Suwon, Gyunggi-do (KR); Sung, Jae Suk, Yongin, Gyunggi-so (KR)
(74) Representative: Powell, Timothy John

(57) **Abstract**

There is provided an antenna pattern frame according to an exemplary embodiment of the present invention, including: a radiator that includes an antenna pattern part transmitting or receiving signals and a connection terminal part to transmit or receive the signals to and from a circuit substrate of an electronic device; and a radiator frame that supports the radiator, the radiator being manufactured by injection molding and the antenna pattern part being embedded in a case of the electronic device, wherein the radiator frame is provided with a fastening part to be removed from the manufacturing mold for injection-molding the case of the electronic device in which the radiator is embedded.

## Description

### CROSS-REFERENCE TO RELATED APPLICATIONS

This application claims the priority of Korean Patent ApplicationNo. 10-2010-0022827 filed on March 15, 2010, in the Korean Intellectual Property Office, the disclosure of which is incorporated herein by reference.

### BACKGROUND OF THE INVENTION

### Field of the Invention

The present invention relates to an antenna pattern frame, a case of an electronic device, and a mold for manufacturing the same, and more particularly, to an antenna pattern frame having an antenna radiator formed on the surface thereof so that the antenna radiator is embedded in a case of an electronic device, a case of an electronic device, and a mold for manufacturing the same.

### Description of the Related Art

Mobile communication terminals, for example, cellular phones, PDAs, navigation devices, notebook computers, or the like, that are used to support wireless communication are necessities in modern society. The mobile communication terminals have been developed to have functions, such as CDMA, wireless LAN, GSM, DMB, or the like. One of the most important parts that enable these functions is an antenna.

The antenna used in the mobile communication terminal has been evolved from an exterior type antenna such as a rod antenna or a helical antenna to an interior type antenna where an antenna is mounted in the terminal.

There have been problems in that the exterior type antenna is vulnerable to external impact and the interior type antenna increases the volume of the terminal.

In order to solve these problems, research into the integration of the mobile communication terminal and the antenna has been actively conducted.

Recently, the present applicant has proposed a method for forming an antenna pattern frame by injection-molding a radiator and embedding a radiator formed on a surface of an antenna pattern frame in a case of an electronic device by injection-molding, i.e., double-injecting the antenna pattern frame, in order to embed the antenna in the case of the electronic device.

As described above, when manufacturing the case of the electronic device in which the radiator is embedded by double injection, the case of the electronic device integrated with the antenna pattern frame is formed by disposing the antenna pattern frame formed with the radiator in the mold for manufacturing the case of the electronic device and introducing a resin material into the mold.

However, the above-mentioned method requires a process of introducing an injection liquid in an extreme situation such as high temperature and high pressure and when an inner space of the mold that becomes the case of the electronic device is larger than the thickness of the antenna pattern frame disposed in the mold for manufacturing the case of the electronic device, there is a problem in that the antenna pattern frame may be pushed into the mold for manufacturing the case of the electronic device by the high-temperature and high-pressure injection liquid.

As a result, the antenna pattern frame is not fixed to the mold for manufacturing the case of the electronic device by the high-temperature and high-pressure injection liquid, thereby causing a defective appearance, that is, quality defects.

### SUMMARY OF THE INVENTION

An aspect of the present invention provides an antenna pattern frame having a radiator formed on the surface thereof and a case of an electronic device in which the antenna radiator is embedded.

An aspect of the present invention also provides a mold for manufacturing an antenna pattern frame and a case of an electronic device in which an antenna radiator is embedded.

An aspect of the present invention also reduces appearance defects by stably fixing an antenna pattern frame to a mold for manufacturing a case of an electronic device when molding the case of the electronic device in which an antenna radiator is embedded.

According to an aspect of the present invention, there is provided an antenna pattern frame, including: a radiator that includes an antenna pattern part transmitting or receiving signals and a connection terminal part to transmit or receive the signals to and from a circuit substrate of an electronic device; and a radiator frame that embeds the antenna pattern part in a case of the electronic device and supports the radiator, the radiator being manufactured by injection molding, wherein the radiator frame may be provided with a fastening part to be removed from the manufacturing mold for injection-molding the case of the electronic device.

The fastening part may include an extending part formed to be extended from the radiator frame and a fixing part formed to be bent at the end of the extending part.

The fastening part may be formed in plural and the bending direction of the fixing part may be at least one of the same direction as the other fixing part, a direction opposite to the other fixing part.

A space between the fixing parts may have a shape corresponding to a fastening support part formed in a manufacturing mold for injection-molding the case of the electronic device in which the radiator is embedded.

The fastening part may include an extending part extending from the radiator frame and a fixing part bent to both sides at the end of the extending part.

The radiator may include a connection part that is a part of the radiator and connects the antenna pattern part to the connection terminal part, and the connection part may connect the antenna pattern part formed on one surface of the radiator frame to the connection terminal part formed on a surface opposite to the one surface.

The connection terminal part may be supported by contacting the radiator support part that is protruded from the surface opposite to the one surface on which the antenna pattern part of the radiator frame is formed.

According to another aspect of the present invention, there is provided a case of an electronic device, including: a radiator that includes an antenna pattern part transmitting or receiving signals and a connection terminal part to transmit or receive the signals to and from a circuit substrate of an electronic device; a radiator frame that is provided with a fastening part supporting and fixing the radiator and removed from the manufacturing mold for injection-molding the case of the electronic device in which the radiator is embedded, the radiator being manufactured by the injection molding; and a case frame that covers a surface of the radiator frame and embeds the antenna pattern part between the radiator frame and the case frame.

The fastening part may include an extending part extending from the radiator frame and a fixing part bent at the end of the extending part.

The fastening part may be formed in plural and the bending direction of the fixing part may be at least one of the same direction as the other fixing part, a direction opposite to the other fixing part, and a direction facing the other fixing part.

A space between the fixing parts may have a shape corresponding to a fastening support part formed in a manufactruing mold for injection-molding the case of the electronic device in which the radiator is embedded.

The fastening part may include an extending part extending from the radiator frame and a fixing part bent to both sides at the end of the extending part.

The radiator may include a connection part that is a part of the radiator and connects the antenna pattern part to the connection terminal part, and the connection part may connect the antenna pattern part formed on one surface of the radiator frame to the connection terminal part formed on a surface opposite to the one surface.

The connection terminal part may be supported by contacting the radiator support part that is protruded from the surface opposite to the one surface on which the antenna pattern part of the radiator frame is formed.

According to another aspect of the present invention, there is provided a mold for manufacturing a case of an electronic device, including: upper and lower molds accommodating an antenna pattern frame that includes a radiator including an antenna pattern part transmitting and receiving signals and a connection terminal part contacting a circuit substrate of an electronic device, a radiator frame supporting the radiator, and a fastening part formed on one surface of the radiator frame; and when the upper and lower molds are combined with each other, a resin material inlet that is formed in any one of the upper mold, the lower mold, and the upper and lower molds, to form the case of the electronic device by introducing a resin material into an inner space of the upper and lower molds and combining the antenna pattern frame with the resin material; wherein the lower mold may include a fastening support part formed to remove the fastening part therefrom and the antenna pattern frame is the case of the electronic device by the inner space.

The fastening part may include an extending part extending from the radiator frame and a fixing part formed to be bent at the end of the extending part, and the fastening support part of the lower mold , au include an extending support part extending from the lower mold and a fixing support part bent at the end of the extending support part so that it is removed from the fastening part.

The fastening part is formed in plural and the bending direction of the fixing part may be at least one of the same direction as the other fixing part, a direction opposite to the other fixing part, and a direction facing the other fixing part, and the fixing support part of the lower mold may be formed in a direction opposite to the bending direction of the fixing part to be removed from the fastening part.

The fastening part may be formed in plural and the bending direction of the fixing part faces the other fixing part, and the fastening support part of the lower mold may have a shape corresponding to a space between the fixing parts so that the fastening support part is sled into the space of the fastening part.

The fastening support part of the lower mold may have a space corresponding to the fastening part and the fastening part may be slid into the space.

### BRIEF DESCRIPTION OF THE DRAWINGS

The above and other aspects, features and other advantages of the present invention will be more clearly understood from the following detailed description taken in conjunction with the accompanying drawings, in which:

FIG. 1 is a perspective view schematically showing a partially cutaway case of an electronic device, a mobile communication terminal according to an exemplary embodiment of the present invention;

FIG. 2 is a perspective view schematically showing a radiator used in manufacturing an antenna pattern frame according to an exemplary embodiment of the present invention;

FIG. 3 is a perspective view schematically showing an antenna pattern frame according to an exemplary embodiment of the present invention;

FIG. 4 is a rear perspective view of the antenna pattern frame of FIG. 3;

FIG. 5A is a schematic cross-sectional view taken along line A-A of FIGS. 3 and 4;

FIG. 5B is a schematic cross-sectional view showing a shape in which a resin material is filled in a mold for manufacturing the antenna pattern frame in order to manufacture the antenna pattern frame of FIG. 5A;

FIGS. 6 to 10 are schematic cross-sectional views showing an antenna pattern frame according to the second through seventh exemplary embodiments of the present invention and a shape in which a resin material is filled in a mold for manufacturing the antenna pattern frame in order to manufacture the antenna pattern frame;

FIG. 11 is an exploded perspective view of a case of an electronic device, a mobile communication terminal according to an exemplary embodiment of the present invention in which the antenna pattern frame is embedded;

FIG. 12 is a schematic diagram showing a method for manufacturing the case of the electronic device according to an exemplary embodiment of the present invention in which the antenna pattern frame is embedded; and

FIGS. 13 to 18 are schematic cross-sectional views showing a process of inserting the antenna pattern frame into the mold for manufacturing the electronic device and a shape where the resin material is filled in order to manufacture the case of the electronic device according to the first through sixth embodiments of the present invention.

### DETAILED DESCRIPTION OF THE PREFERRED EMBODIMENT

Exemplary embodiments of the present invention will hereinafter be described in detail with reference to the accompanying drawings. However, it should be noted that the spirit of the present invention is not limited to the embodiments set forth herein and those skilled in the art and understanding the present invention could easily accomplish retrogressive inventions or other embodiments included in the spirit of the present invention by the addition, modification, and removal of components within the same spirit; however, those are to be construed as being included in the spirit of the present invention.

Further, throughout the drawings, the same or similar reference numerals will be used to designate the same components or like components having the same functions in the scope of the similar idea.

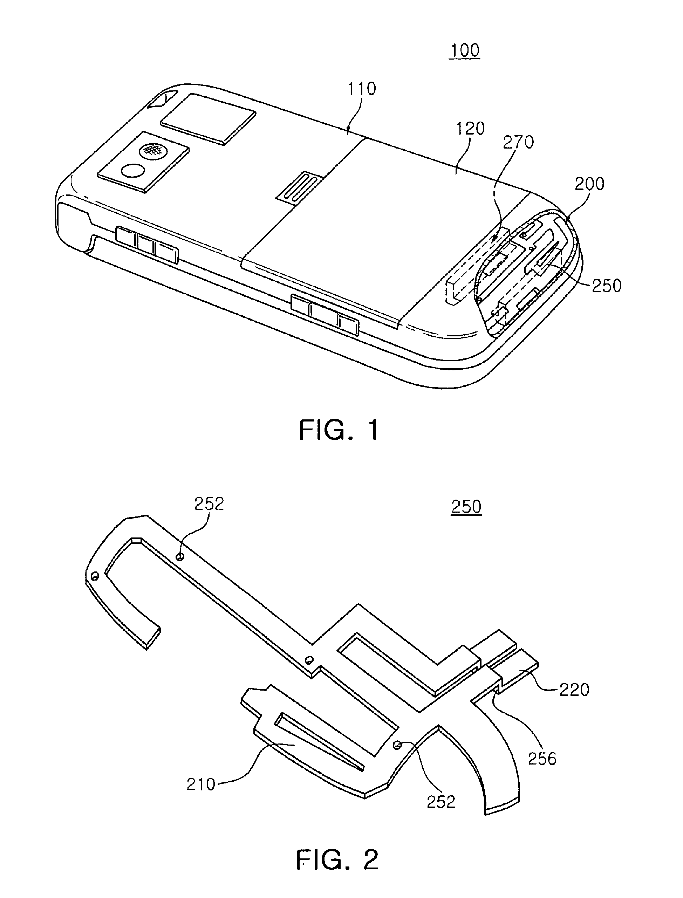

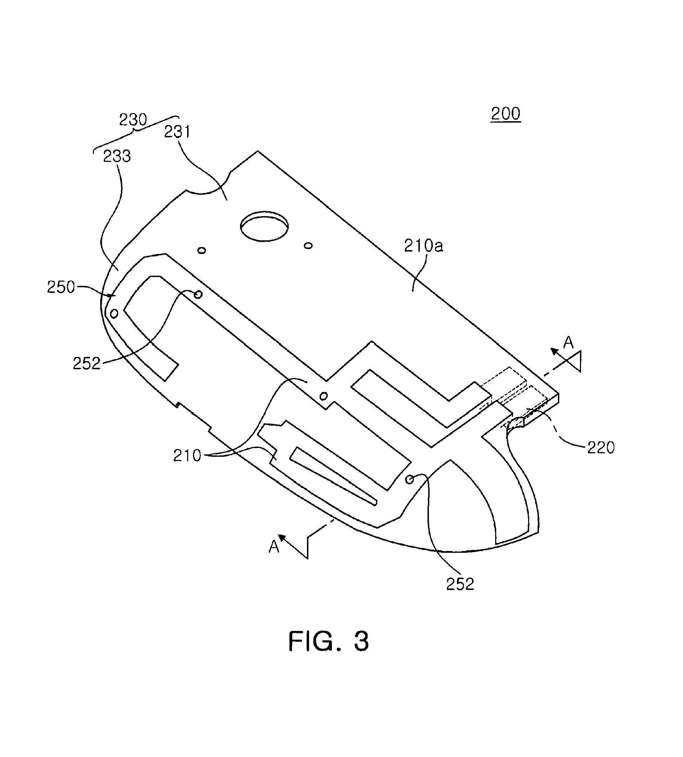

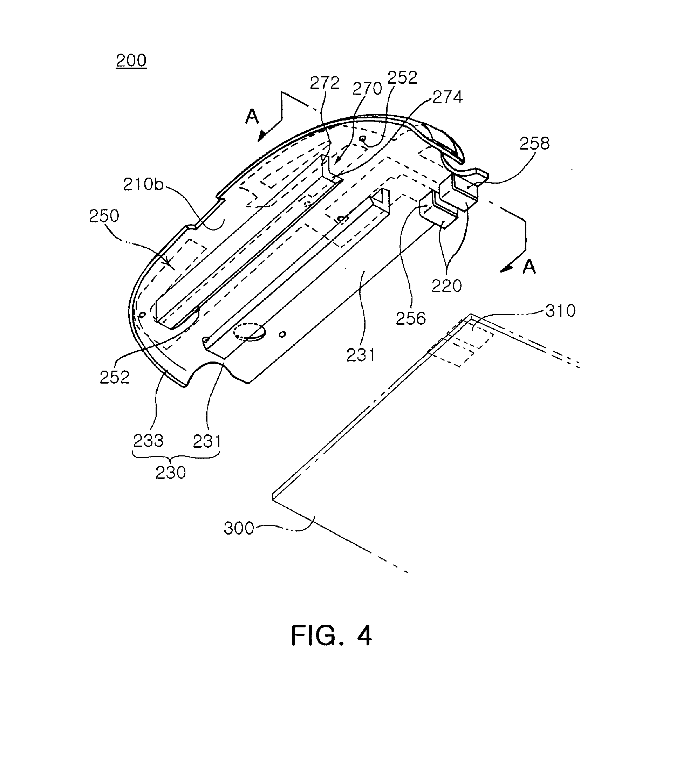

FIG. 1 is a perspective view schematically showing a partially cutaway case of an electronic device, a mobile communication terminal according to an exemplary embodiment of the present invention, FIG. 2 is a perspective view schematically showing a radiator used in manufacturing an antenna pattern frame according to an exemplary embodiment of the present invention, FIG. 3 is a perspective view schematically showing an antenna pattern frame according to an exemplary embodiment of the present invention, and FIG. 4 is a rear perspective view of the antenna pattern frame of FIG. 3.

Referring to FIGS. 1 through 4, it can be appreciated that a radiator 250 provided with an antenna pattern according to an exemplary embodiment of the present invention is embedded in a case 110 of a mobile communication terminal 100. In order to form the radiator 250 provided with the antenna pattern in the inside of the case 110, an antenna pattern frame 200 that forms the radiator 250 provided with the antenna pattern on a radiator frame 230 is needed.

The antenna pattern frame 200 according to an exemplary embodiment of the present invention may include the radiator 250 provided with an antenna pattern part 210, a connection terminal part 220, the radiator frame 230, and a fastening part 270.

The radiator 250 is made of a conductive material such as aluminum, copper, or the like, to receive external signals and to transmit them to a signal processing unit in the electronic device such as the mobile communication terminal 100. Further, the radiator 250 may include the antenna pattern part 210 forming a meander line in order to receive the external signals of various bands.

The radiator 250 in which the antenna pattern part 210 receiving the external signals and the connection terminal part 220 contacting a circuit substrate of the electronic device to transmit the external signals to the electronic device are disposed on different planes may be provided.

Further, the radiator 250 may be formed to have a three-dimensional structure by bending the antenna pattern part 210 and the connection terminal part 220, respectively, and the antenna pattern part 210 and the connection terminal part 220 may be bent and connected to each other by a bending connection part 256.

The bending connection part 256 may configure the antenna pattern part 210 and the connection terminal part 220 on a different plane and the connection terminal part 220 that is not embedded in the case of the electronic device may be exposed at an opposite surface 210b of a surface 210a of the antenna pattern frame 200.

In other words, the antenna pattern part 210 and the connection terminal part 220 are bent based on the bending connection part 256, such that the radiator 250 may be implemented to have a three-dimensional curved shape.

In order to support the radiator 250 having the three-dimensional curved shape, a radiator support part 258 may be protruded from the opposite surface 210b of the radiator frame 230.

The radiator support part 258 may firmly support the connection terminal part 220 exposed to the opposite surface 210b and the bending connection part 256.

In addition, the above-mentioned radiator 250 may be provided with a guide pin hole 252.

The guide pin hole 252 will be described below.

The connection terminal part 220 transmits the received external signals to the electronic device and may be formed by performing the bending, forming, and drawing processing on a part of the radiator 250.

In addition, after the connection terminal part 220 is separately manufactured from the radiator 250, it may be manufactured to connect to the radiator 250 and may be connected to the terminal 310 of the circuit substrate 300.

Meanwhile, the radiator frame 230 may be a three-dimensional structure formed of a flat plane part 231 and a curved part 233 having a curvature. The radiator 250 may have flexible characteristic so that it is disposed at the curved part 233 of the radiator frame 230.

The radiator frame 230 is an injection structure, the antenna pattern part 210 may be formed on one surface 210a of the radiator frame 230, and the connection terminal part 220 may be formed on the opposite surface 210b of the one surface 210a.

The radiator frame 230 may embed the antenna pattern in the case 110 of the electronic device by bonding the one surface 210a formed with the antenna pattern part 210 to the inside of the case 110 of the electronic device.

In the structure of the radiator 250 embedded in the case 110 of the electronic device, the antenna pattern part 210 receiving the external signals and the connection terminal part 220 transmitting the external signals to the electronic device may be formed on a different plane.

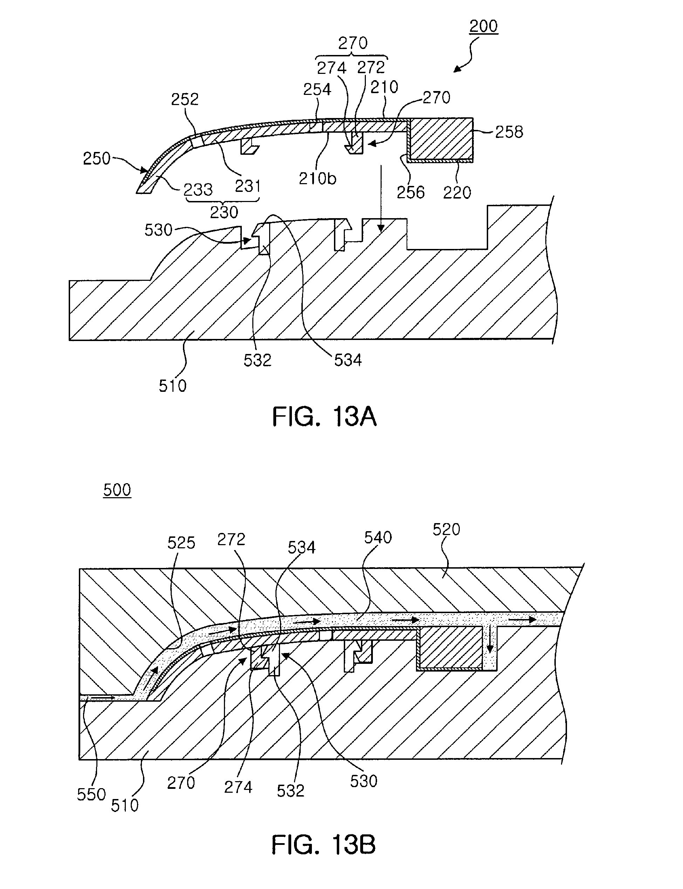

The fastening part 270 is formed on the opposite surface 210b of the radiator frame 230 and may be formed to be removed from the manufacturing mold 500 (see FIG. 13) for injection-molding the case 110 of the electronic device in which the radiator 250 is embedded.

In this case, the fastening part 270 is coupled with a fastening support part 530 formed in a lower mold 510 (see FIG. 13) of the case of the electronic device when injection-molding the case 110 of the electronic device to be described below, such that it can be stably fixed to the mold 500 (see FIG. 13), thereby making it possible to reduce defective appearance and withstand high injection pressure.

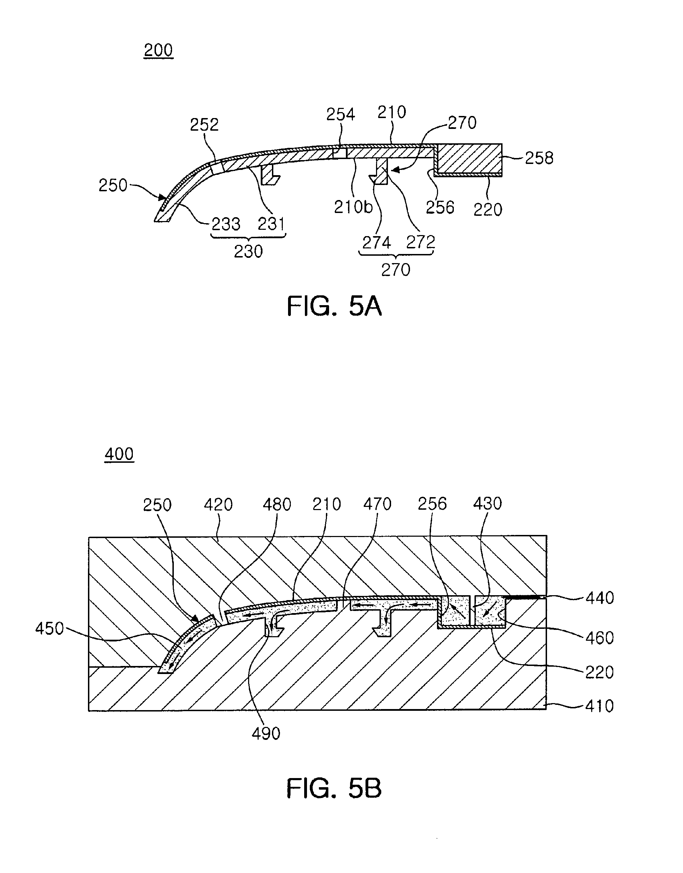

The fastening part 270 will be described below with reference to FIGS. 5 through 10.

FIG. 5A is a schematic cross-sectional view taken along line A-A of FIGS. 3 and 4, FIG. 5B is a schematic cross-sectional view showing a shape in which a resin material is filled in a mold for manufacturing the antenna pattern frame in order to manufacture the antenna pattern frame of FIG. 5A, and FIGS. 6 through 10 are schematic cross-sectional views showing an antenna pattern frame according to the second through seventh exemplary embodiments of the present invention and a shape in which a resin material is filled in a mold for manufacturing the antenna pattern frame in order to manufacture the antenna pattern frame.

Referring to FIG. 5A, the antenna pattern frame 200 according to a first exemplary embodiment of the present invention may include the radiator 250 provided with the antenna pattern part 210, the connection terminal part 220, the radiator frame 230, and the fastening part 270.

The radiator 250 may be provided with the guide pin hole 252. The radiator 250 is the same as the above-mentioned exemplary embodiment except for the guide pin hole 252 and therefore, a description thereof will be omitted.

The guide pin hole 252 formed in the radiator 250 is provided with a guide pin 480 of the manufacturing mold 400 when molding the radiator 250, such that it can prevent the radiator 250 from moving on the radiator frame 230.

In other words, the guide pin 480 may be formed in an upper mold 420 or a lower mold 410 for injection-molding the antenna pattern frame 200 and the guide pin 480 is inserted into the guide pin hole 252 formed in the radiator such that the radiator 250 can be fixed in the mold 400.

In the antenna pattern frame 200, the radiator frame 230 below the guide pin 480 may be formed with a hole.

Further, the guide pin 480 inserted into the guide pin hole 252 formed on the radiator 250 serves to prevent vertical displacement of the radiator 250 in the mold 400 for manufacturing the antenna pattern frame 200.

Further, a contact pin groove 254 formed on the radiator frame 230 is formed by a contact pin 470 formed in the lower mold 410 for injection-molding the antenna pattern frame 200 and the contact pin 470 serves to prevent the radiator 250 from being displaced in a horizontal direction in the mold 400 for manufacturing the antenna pattern frame 200.

The contact pin 470 formed in the lower mold 410 contacts one surface of the radiator 250 to form the contact pin groove 254 in the radiator frame 230.

The fastening part 270 is formed on one surface 210b of the radiator frame 230 and may be formed to be removed from the manufacturing mold 500 (see FIG. 13) for injection-molding the case 110 of the electronic device in which the radiator 250 is embedded.

The fastening part 270 may be configured to include an extending part 272 that extends from the radiator frame 230 and a fixing part 274 that is bent at the end of the extending part 272. The fixing part 274 is coupled with the fixing support part 534 of the fastening support part 530 formed in the lower mold 510 of the manufacturing mold 500 (see FIG. 13) for injection-molding the case 110 of the electronic device in which the radiator 250 to be described below is embedded, such that the radiator frame 230 can be stably fixed in the manufacturing mold 500.

The fastening part 270 may be formed in plural and the bending direction of the fixing part 274 of the fastening part 270 may be formed to face the other fixing part.

The bending direction of the fixing part 274 is formed to be opposite to the bending direction of the fixing support part 534 of the fastening support part 530 formed in the lower mold 510 of the manufacturing mold 500 (see FIG. 13) for injection molding the case 110 of the electronic device in which the radiator 250 is embedded, such that the fixing part 274 can be removed from the radiator frame 230.

In this case, in order to remove the fixing part 274 from the fixing support part 534, it is preferable that at least one of the extending part 272, the fixing part 274, and the fixing support part 534 has slight elasticity.

Referring to FIG. 5B, the radiator 250 is disposed in the inner space 450 of the manufacturing mold 400 after providing the radiator 250.

The inner space 450 is formed when an upper mold 420 and a lower mold 410 are combined with each other and the groove formed in the upper mold 420 or the lower mold 410 becomes the inner space 450 by the combination of the upper mold 420 and the lower mold 410.

If the upper mold 420 and the lower mold 410 are combined with each other, the guide pin 480 formed in the upper or lower molds 410 and 420 penetrates through the guide pin hole 252 formed in the antenna pattern part 210, such that the radiator 250 can be fixed in the inner space 450.

In addition, the contact pin 470 formed in the lower mold 410 contacts one surface of the radiator 250, such that the radiator 250 may be fixed in the inner space 450, similar to the guide pin 480.

The inner space 450 is filled with the resin material to form the radiator frame 230 that embeds the antenna frame 210 in the case 120 of the electronic device.

When the upper and lower molds 410 and 420 are combined with each other, the inner space 450 of the upper and lower molds becomes the radiator frame 230 so that the antenna pattern part 210 is embedded in the case 110 of the electronic device to introduce the resin material into the inner space, thereby making it possible to form the resin material introducing part 440 in any one of the upper, lower or upper and lower molds.

The resin material is identically filled at the boundary surface between the radiator 250 and the radiator frame 230, such that the flowing of the resin material can be good when putting the radiator frame 230 in the mold for manufacturing the case 110 of the electronic device in which the antenna pattern is embedded and injection-molding the radiator frame 230.

In this case, the inner space 450 of the upper or lower molds 410 and 420 is formed with a curved part 233, such that the radiator frame 230 may have the curved part.

Further, the inner space 450 of the upper and lower molds 410 and 420 may accommodate the connection terminal part 220 and include the radiator support part forming groove 460 to form the radiator support part 258 supporting the connection terminal part 220.

In addition, the upper, lower or upper and lower molds 410 and 420 may be provided with a compression pin 430 that compresses the connection terminal part 220 disposed in the radiator support part forming groove 460 to closely attach the connection terminal part 220 to the radiator support part forming groove 460.

The compression pin 430 may prevent the resin material from being introduced under the connection terminal part 220 when the resin material is introduced. When the injection material is covered on a part of the connection terminal part 220, the electrical connection may be unstable, which can be prevented by the compression pin 430.

Further, the lower mold 410 may include a fastening groove 490 so that the radiator frame 230 includes the fastening part 270 removed from the manufacturing mold 400 for injection-molding the case 110 of the electronic device.

The resin material is also introduced into the fastening groove 490, such that the antenna pattern frame 200 may include the fastening part 270.

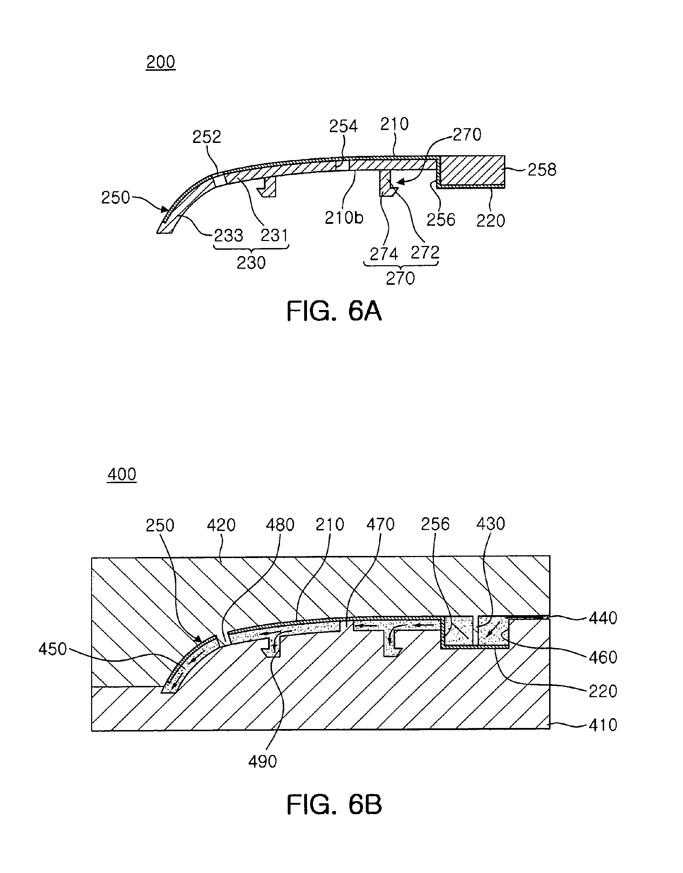

Referring to FIGS. 6A and 6B, the fastening part 270 of the antenna pattern frame 200 according to a second exemplary embodiment of the present invention may be formed in plural and the bending direction of the fixing part 274 of the fastening part 270 may be formed to face the direction opposite to the other fixing part.

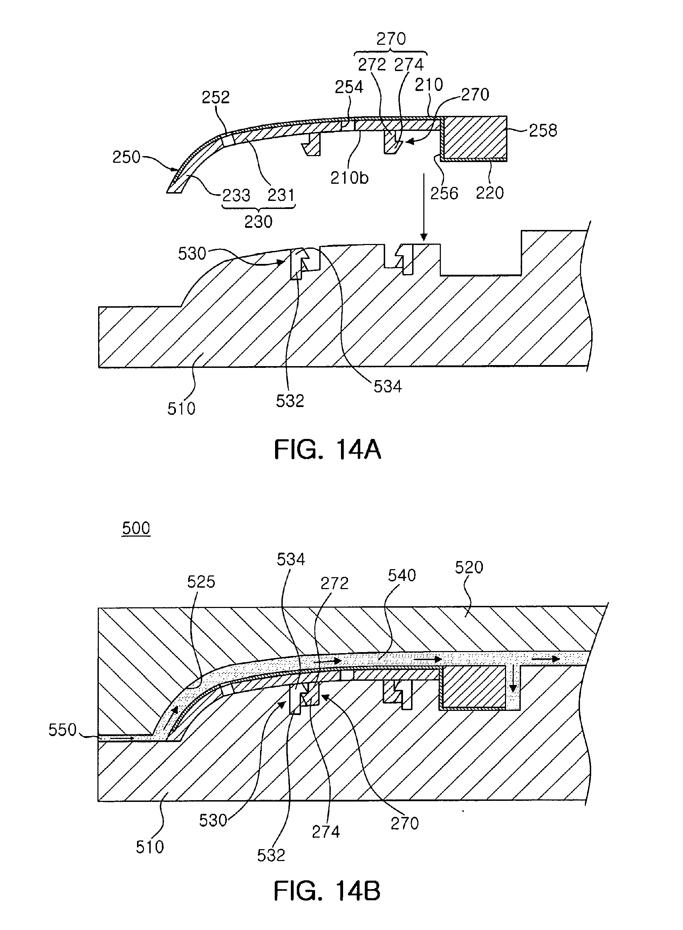

In this case, the bending direction of the fixing part 274 is formed to be opposite to the bending direction of the fixing support part 534 of the fastening support part 530 formed in the lower mold 510 of the manufacturing mold 500 (see FIG. 14) for injection molding the case 110 of the electronic device in which the radiator 250 is embedded, thereby making it possible to remove the radiator frame 230.

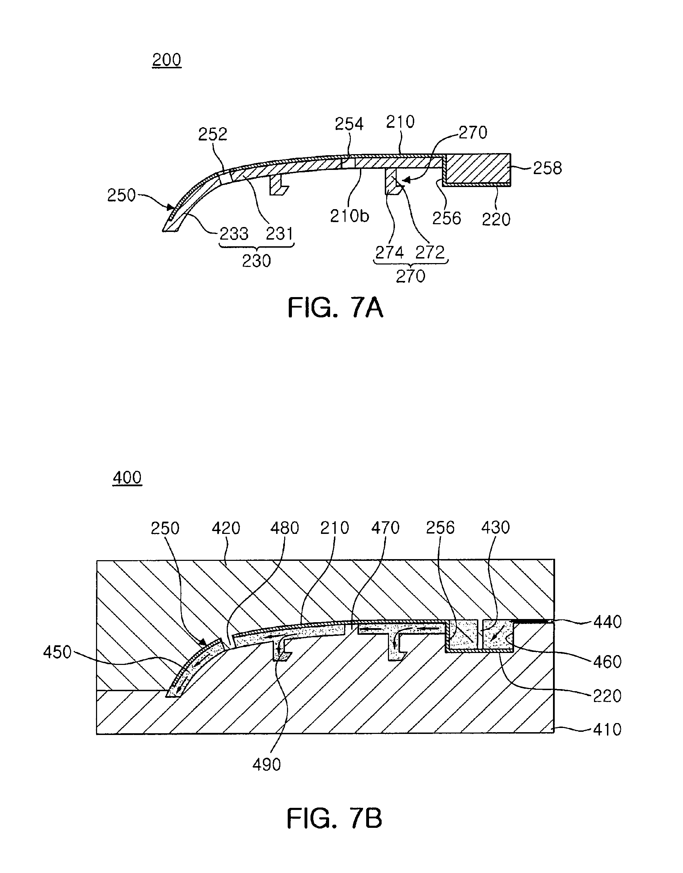

Referring to FIGS. 7A and 7B, the fastening part 270 of the antenna pattern frame 200 according to a third exemplary embodiment of the present invention may be formed in plural and the bending direction of the fixing part 274 of the fastening part 270 may be formed to face the same direction as the other fixing part.

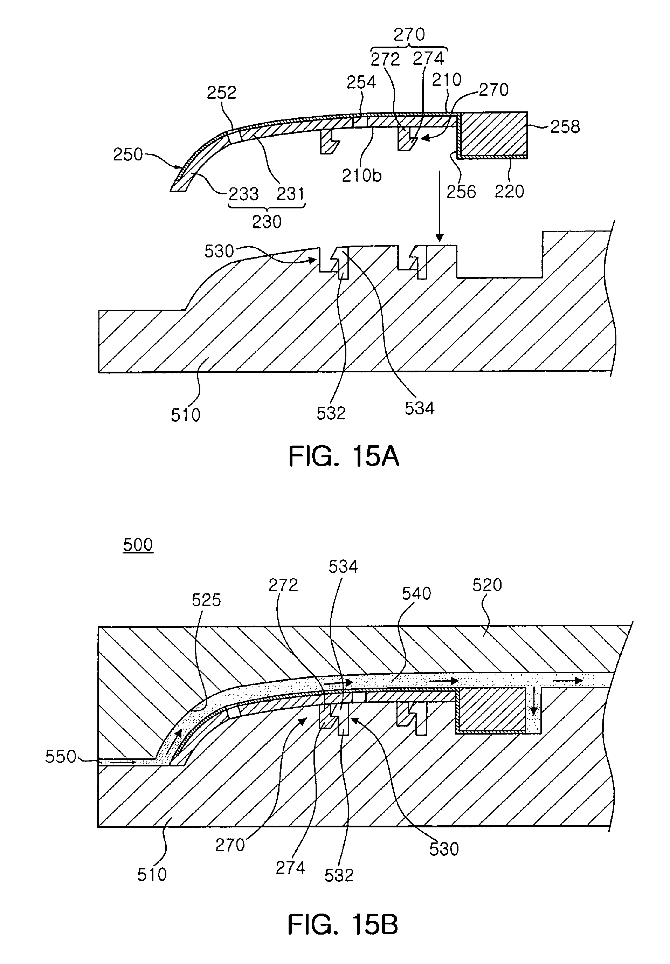

In this case, the bending direction of the fixing part 274 is formed to be opposite to the bending direction of the fixing support part 534 of the fastening support part 530 formed in the lower mold 510 of the manufacturing mold 500 (see FIG. 15) for injection molding the case 110 of the electronic device in which the radiator 250 is embedded, thereby making it possible to remove the radiator frame 230.

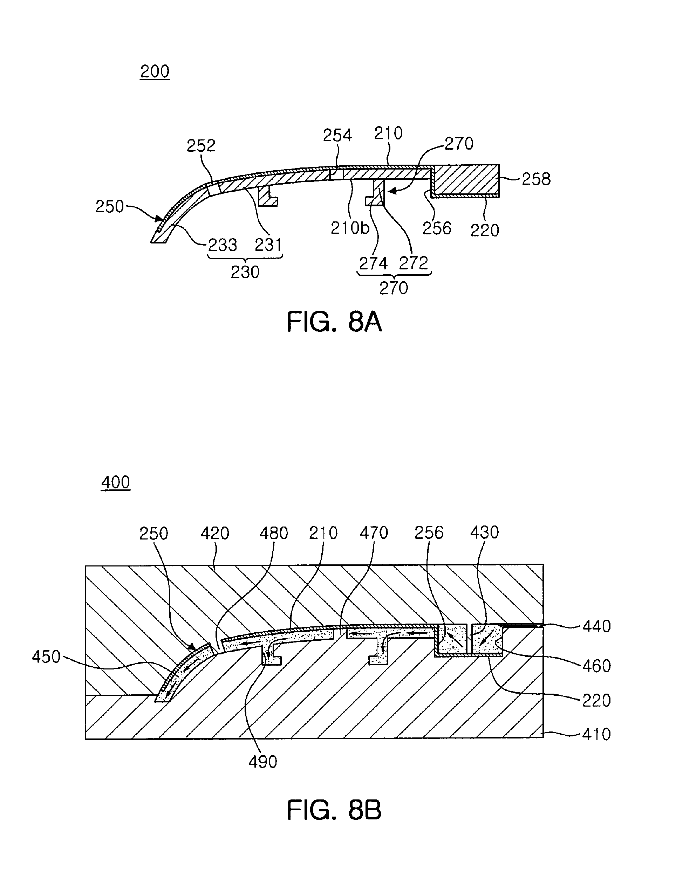

Referring to FIGS. 8A and 8B, the fastening part 270 of the antenna pattern frame 200 according to a fourth exemplary embodiment of the present invention may be formed in plural and the fixing part 274 of the fastening part 270 may be formed in a right-angled shape, unlike the first to third exemplary embodiments.

However, the bending direction of the fixing part 274 is not limited to the direction depicted in FIG. 8 and therefore, may be any one of the direction of the other fixing part, the opposite direction, and the same direction.

In this case, in order to remove the fixing part 274 from the fixing support part 534, it is preferable that at least one of the extending part 272, the fixing part 274, and the fixing support part 534 has slight elasticity.

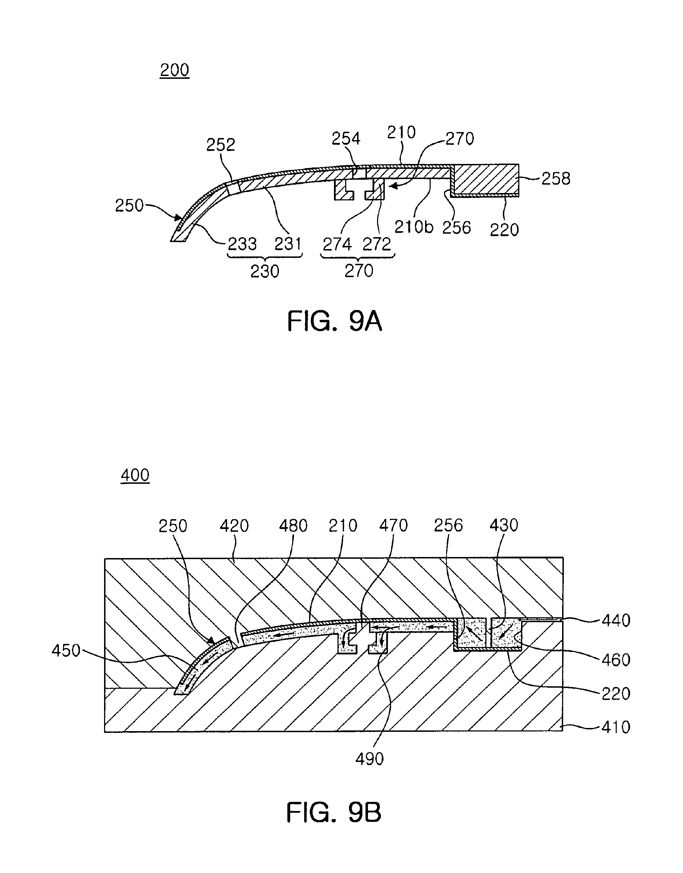

Referring to FIGS. 9A and 9B, the fastening part 270 of the antenna pattern frame 200 according to a fifth exemplary embodiment of the present invention may be formed in plural and the bending direction of the fixing part 274 may be formed toward the other fixing part.

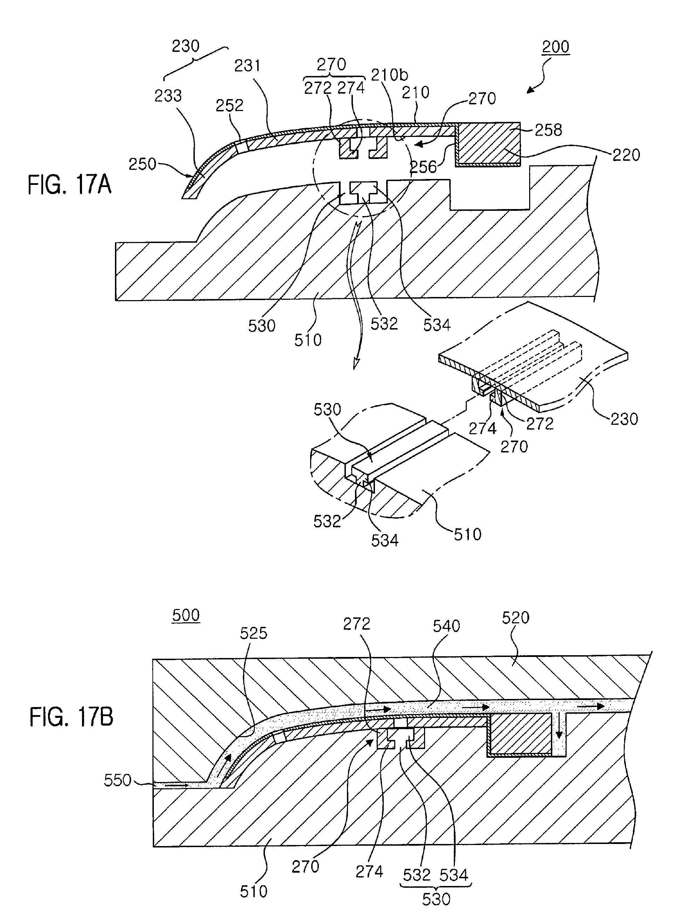

The space between the fixing parts 274 of the fastening part 270 may have a shape corresponding to the fastening support part 530 formed in the manufacturing mold 500 (see FIG. 17) for injection-molding the case of the electronic device in which the radiator 250 is embedded.

The fastening support part 530 is slid into the space between the fixing parts 274, such that the radiator frame 230 can be stably fixed in the manufacturing mold 500. Therefore, the radiator frame can withstand the high-temperature and high-pressure injection liquid.

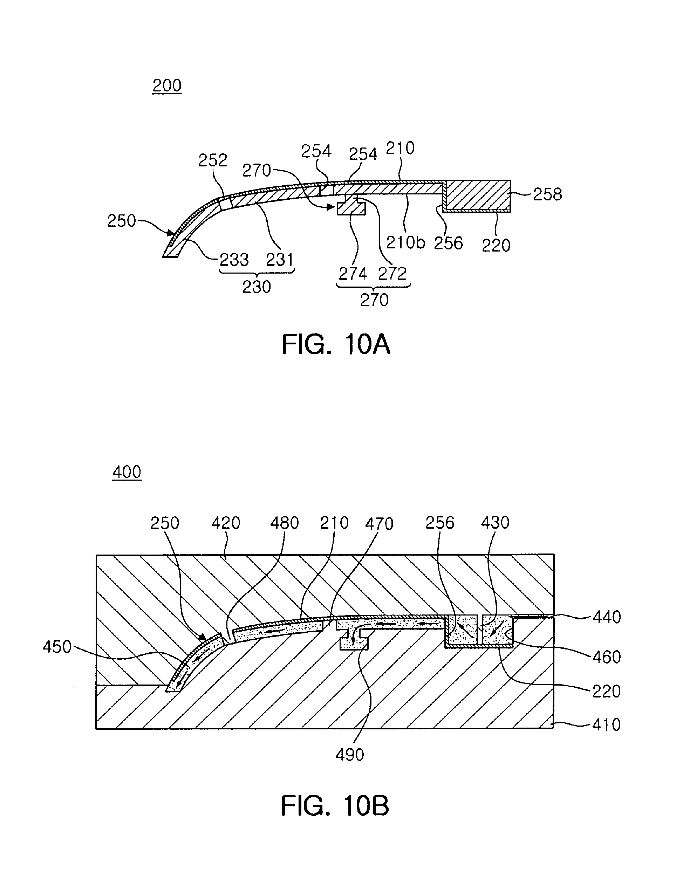

Referring to FIGS. 10A and 10B, the fastening part 270 of the antenna pattern frame 200 according to the sixth exemplary embodiment of the present invention may be configured to include the extending part 272 extending from the radiator frame 230 and the fixing part 274 bent to both sides at the end of the extending part.

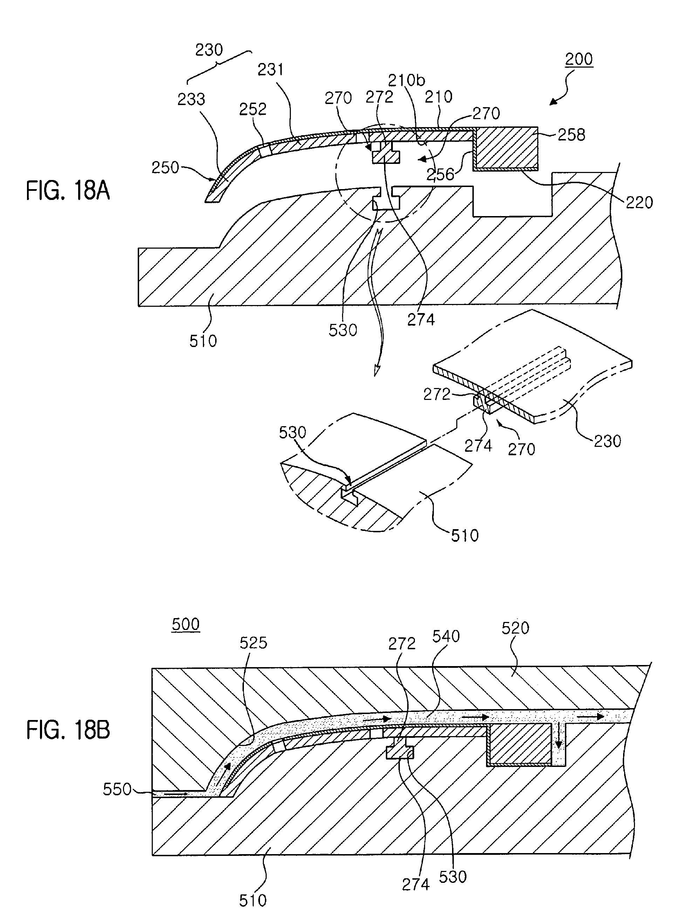

The fixing part 274 may have a shape corresponding to a space in which the fastening support part 530 is formed, wherein the fastening support part is formed in the manufacturing mold 500 (see FIG. 18) for injection-molding the case of the electronic device in which radiator 250 is embedded.

The fixing part 274 is slid into the space in which the fastening support part 530 is formed, such that the radiator frame 230 can be stably fixed in the manufacturing mold 500. Therefore, the radiator frame can withstand the high-temperature and high-pressure injection liquid.

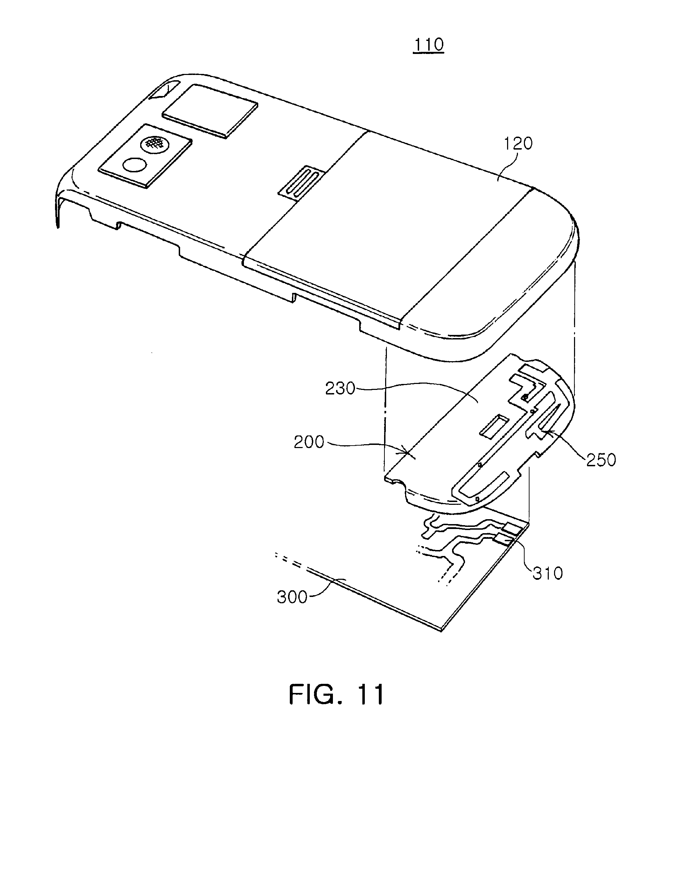

FIG. 11 is an exploded perspective view of a case of an electronic device, a mobile communication terminal according to an exemplary embodiment of the present invention in which the antenna pattern frame is embedded.

Referring to FIG. 11, the case 110 of the electronic device according to the exemplary embodiment of the present invention in which the antenna pattern frame 200 is embedded may include the radiator 250, the radiator frame 230, and the case frame 120.

The radiator 250 and the radiator frame 230 are described in the exemplary embodiment and therefore, a detailed description thereof will be omitted.

The case frame 120 covers one surface of the radiator frame 230 in which the antenna pattern part 210 is formed to embed the antenna pattern part 210 between the radiator frames 230.

Further, the radiator frame 230 and the case frame 120 may be integrated without dividing the boundary therebetween. When viewing the case 110 of the electronic device from the rear, the antenna pattern part 210 may not be shown and only the connection terminal part 220 may be shown.

The radiator frame 230, the case frame 120, or the radiator frame 230 and the case frame 120 may be formed by the injection molding. In particular, when the radiator frame 230 and the case frame 120 are formed of a separate injection fixture, it is manufactured by bonding the radiator frame 230 in which the radiator 250 is formed to the case frame 120.

Meanwhile, the case frame 120 is injection-molded in the radiator frame 230, which may be called a double injection molding. In other words, the radiator frame 230 is disposed in the mold and is then subjected to insert injection, thereby making it possible to integrate the radiator frame 230 and the case frame 120.

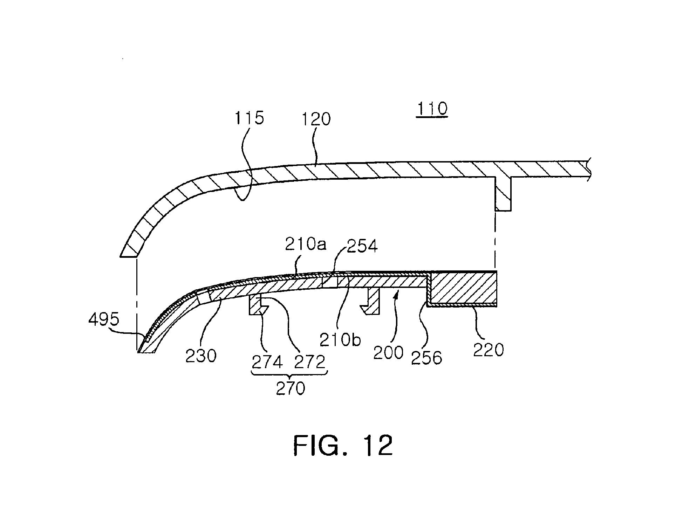

FIG. 12 is a schematic diagram showing a method for manufacturing the case of the electronic device according to an exemplary embodiment of the present invention in which the antenna pattern frame is embedded.

Referring to FIG. 12, the case frame 120 is a separate injection product having a radiator receiving groove 115 in a shape corresponding to the radiator frame 230 and the case 110 of the electronic device in which the antenna pattern frame is embedded by bonding the radiator frame 230 to the radiator receiving groove 115 may be manufactured.

An adhesive layer 495 may be formed on the surface of the radiator 250 of the antenna pattern frame 200.

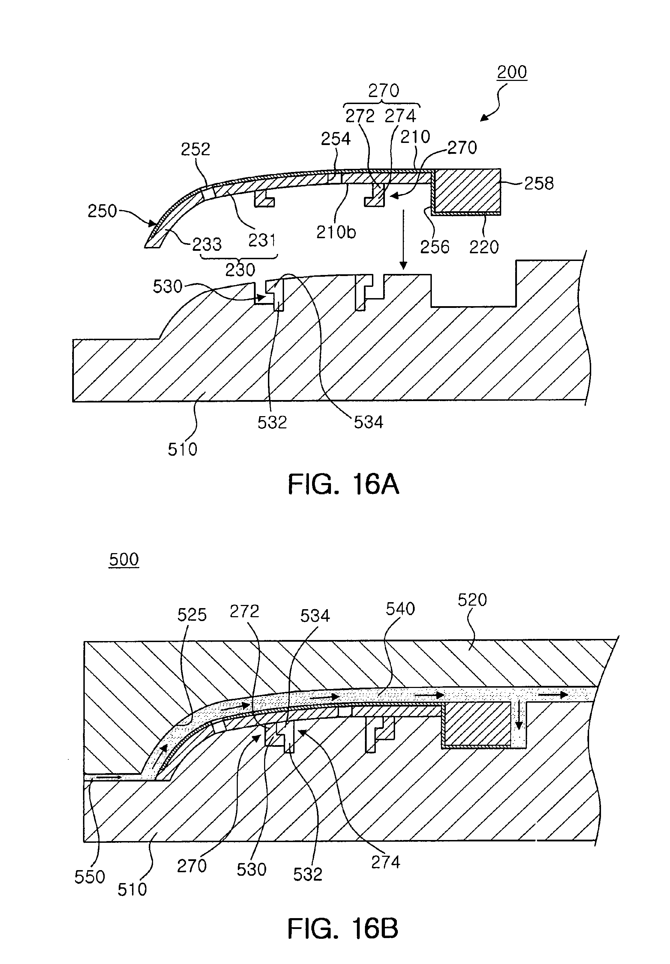

FIGS. 13 through 18 are schematic cross-sectional views showing a process of inserting the antenna pattern frame into the mold for manufacturing the electronic device and a shape where the resin material is filled in order to manufacture the case of the electronic device according to the first through sixth embodiments of the present invention.

Referring to FIGS. 13 through 16, the fastening part 270 of the antenna pattern frame 200 is coupled with the fastening support part 530, including an extending support part 532 and a fixing support part 534, of the lower mold 510 to be fixed and supported.

The radiator frame 230 is disposed in the mold 500 for manufacturing the case of the electronic device having an inner space 540 and the resin material is introduced into the mold, such that the radiator frame 230 is integrated with the case 110 of the electronic device.

The fastening part 270 may have slight elasticity, such that the fastening part 270 contacts the fixing support part 534, which is the upper portion of the fastening support part 530, when the fastening part 270 is pressed from the upper portion of the lower mold 510 and then may be stably fixed.

Further, when the fastening support part 530 contacts the fastening part 270, it is slightly pushed backwardly by the pressure of the fastening part 270, such that it is coupled with the fastening part 270. After the coupling, the fastening support part 530 is again returned to an original position by the elasticity contained therein, such that it can be stably fixed.

In the case of FIGS. 13 through 15, after the fastening support part 530 is coupled with the fastening part 270, a slight space is formed therebetween due to the tapered shape of the fixing part 274 of the fastening part 270 and the fixing support part of the fastening support part 530, such that the resin material may be introduced into the space.

However, the resin material filled in the space is removed later by machining such as cutting, such that the space is not a major issue.

Meanwhile, the radiator frame 230 and the case frame 120 may be formed without dividing the boundary therebetween.

When the injection of the antenna pattern frame 200 is called the primary injection and the injection of the case 110 of the electronic device is called the secondary injection, the antenna pattern frame 200 may be fixed and supported not to be displaced by the fastening part 270 and the fastening support part 530 in the secondary injection manufacturing mold 500, even in the secondary injection as in the primary injection.

In other words, the fastening part 270 is inserted into the secondary injection mold 500 to serve to fix and support the injection product, that is, the radiator frame 230, so that the injection product can withstand the high temperature and the high injection pressure.

Further, the inner space 540 of the manufacturing mold 500 may include the curve forming part 525 so that the case 110 of the electronic device has the curved part.

Meanwhile, the mold 500 for manufacturing the case of the electronic device that manufactures the case 120 of the electronic device in which the antenna patter is embedded by the secondary injection may form the antenna pattern part 210 receiving the external signals and the connection terminal part 220 contacting the circuit substrate of the electronic device on a different plane.

The radiator frame 230 having the radiator 250 is formed in the upper or lower molds 510 and 520 and the upper and lower molds 510 and 520 of the mold for manufacturing the case of the electronic device and when the upper or lower molds 510 and 520 are combined with each other, the case of the electronic device may include the resin material introducing part 550 introducing the resin material into the inner space so that the inner space 540 formed in the mold becomes the case 120 of the electronic device.

Referring to FIGS. 17 through 18, the fastening part 270 of the antenna pattern frame 200 is slidably coupled with the fastening support part 530 of the lower mold 510 to be fixed and supported.

The fastening part 270 may be formed in plural and the space between the fixing parts 274 of the fastening part 270 may have a shape corresponding to the fastening support part 530 formed in the manufacturing mold 500 for injection-molding the case of the electronic device in which the radiator 250 is embedded.

The fastening support part 530 is slid into the space between the fixing parts 274, such that the radiator frame 230 can be stably fixed in the manufacturing mold 500. Therefore, the antenna pattern frame can withstand the high-temperature and high-pressure injection liquid.

Further, the fastening part 270 may be configured to include the extending part 272 extending from the radiator frame 230 and the fixing part 274 bent to both sides from the end of the extending part, wherein the fixing part 274 is slid into the space in which the fastening support part 530 is formed to stably fix the radiator frame 230 in the manufacturing mold 500, such that the radiator frame 230 can withstand the high-temperature and high-pressure injection liquid.

According to the above-mentioned exemplary embodiments, the antenna pattern frame of the mold 500 for manufacturing the case of the electronic device may be supported and fixed in the inner space 540 of the mold 500 by the fastening part 270, which can prevent defects due to the appearance of a protrusion, withstand the injection pressure encountered during the injection molding process, and prevent the degradation in transmission and reception to and from the antenna pattern part.

As set forth above, the antenna pattern frame, the case of the electronic device, and the mould for manufacturing the same according to the present invention stably fixes the antenna pattern frame to the inner space of the mould for manufacturing the case of the electronic device when molding the case of the electronic device in which the antenna radiator is embedded, thereby making it possible to reduce the appearance defects and to provide a structure withstanding the high-temperature and high-pressure injection liquid when performing the injection molding.

While the present invention has been shown and described in connection with the exemplary embodiments, it will be apparent to those skilled in the art that modifications and variations can be made without departing from the spirit and scope of the invention as defined by the appended claims.

## Claims

1. An antenna pattern frame, comprising:
a radiator that includes an antenna pattern part transmitting or receiving signals and a connection terminal part to transmit or receive the signals to and from a circuit substrate of an electronic device; and
a radiator frame that embeds the antenna pattern part in a case of the electronic device and supports the radiator, the radiator being manufactured by injection molding,
wherein the radiator frame is provided with a fastening part to be removed from the manufacturing mold for injection-molding the case of the electronic device.

2. The antenna pattern frame of claim 1, wherein the fastening part includes an extending part formed to be extended from the radiator frame and a fixing part formed to be bent at the end of the extending part.

3. The antenna pattern frame of claim 2, wherein the fastening part is formed in plural and the bending direction of the fixing part is at least one of the same direction as the other fixing part, a direction opposite to the other fixing part, and a direction facing the other fixing part.

4. The antenna pattern frame of claim 3, wherein a space between the fixing parts has a shape corresponding to a fastening support part formed in a manufacturing mold for injection-molding the case of the electronic device in which the radiator is embedded.

5. The antenna pattern frame of claim 1, wherein the fastening part includes an extending part extending from the radiator frame and a fixing part formed bent to both sides at the end of the extending part.

6. The antenna pattern frame of claim 1, wherein the radiator includes a connection part that is a part of the radiator and connects the antenna pattern part to the connection terminal part, and
the connection part connects the antenna pattern part formed on one surface of the radiator frame to the connection terminal part formed on a surface opposite to the one surface.

7. The antenna pattern frame of claim 1, wherein the connection terminal part is supported by contacting the radiator support part that is protruded from the surface opposite to the one surface on which the antenna pattern part of the radiator frame is formed.

8. A case of an electronic device, comprising:
a radiator that includes an antenna pattern part transmitting or receiving signals and a connection terminal part to transmit or receive the signals to and from a circuit substrate of an electronic device;
a radiator frame that is provided with a fastening part supporting and fixing the radiator and removed from the manufacturing mold for injection-molding the case of the electronic device in which the radiator is embedded, the radiator being manufactured by the injection molding; and
a case frame that covers one surface of the radiator frame and embeds the antenna pattern part between the radiator frame and the case frame.

9. The case of the electronic device of claim 8, wherein the fastening part includes an extending part extending from the radiator frame and a fixing part bent at the end of the extending part.

10. The case of the electronic device of claim 9, wherein the fastening part is formed in plural and the bending direction of the fixing part is at least one of the same direction as the other fixing part, a direction opposite to the other fixing part, and a direction facing the other fixing part.

11. The case of the electronic device of claim 10, wherein a space between the fixing parts has a shape corresponding to a fastening support part formed in a manufacturing mold for injection-molding the case of the electronic device in which the radiator is embedded.

12. The case of the electronic device of claim 8, wherein the fastening part includes an extending part extending from the radiator frame and a fixing part bent to both sides at the end of the extending part.

13. The case of the electronic device of claim 8, wherein the radiator includes a connection part that is a part of the radiator and connects the antenna pattern part to the connection terminal part, and
the connection part connects the antenna pattern part formed on one surface of the radiator frame to the connection terminal part formed on a surface opposite to the one surface.

14. The case of the electronic device of claim 8, wherein the connection terminal part is supported by contacting the radiator support part that is protruded from the surface opposite to the one surface on which the antenna pattern part of the radiator frame is formed.

15. A mold for manufacturing a case of an electronic device, comprising:
upper and lower molds accommodating an antenna pattern frame that includes a radiator including an antenna pattern part transmitting and receiving signals and a connection terminal part contacting a circuit substrate of an electronic device, a radiator frame supporting the radiator, and a fastening part formed on one surface of the radiator frame; and
when the upper and lower molds are combined with each other, a resin material inlet that is formed in any one of the upper mold, the lower mold, and the upper and lower molds to form the case of the electronic device by introducing a resin material into an inner space of the upper and lower molds and combining the antenna pattern frame with the resin material;
wherein the lower mold includes a fastening support part formed to remove the fastening part therefrom and the antenna pattern frame is the case of the electronic device by the inner space.

16. The mold for manufacturing the case of the electronic device of claim 15, wherein the fastening part includes an extending part extending from the radiator frame and a fixing part formed to be bent at the end of the extending part, and
the fastening support part of the lower mold include an extending support part extending from the lower mold and a fixing support part bent at the end of the extending support part so that it is removed from the fastening part.

17. The mold for manufacturing the case of the electronic device of claim 16, wherein the fastening part is formed in plural and the bending direction of the fixing part is at least one of the same direction as the other fixing part, a direction opposite to the other fixing part, and a direction facing the other fixing part, and
the fixing support part of the lower mold is formed in a direction opposite to the bending direction of the fixing part to be removed from the fastening part.

18. The mold for manufacturing the case of the electronic device of claim 16, wherein the fastening part is formed in plural and the bending direction of the fixing part faces the other fixing part, and
the fastening support part of the lower mold has a shape corresponding to a space between the fixing parts so that the fastening support part is slid into the space of the fastening part.

19. The mold for manufacturing the case of the electronic device of claim 16, wherein the fastening support part of the lower mold has a space corresponding to the fastening part and the fastening part is slid into the space.
